# FASCICULE DE BREVET EUROPEEN

(11) **EP 3 255 976 B1**
(45) Date de publication et mention de la délivrance du brevet: **06.01.2021**
(21) Numéro de dépôt: 16707903.7
(22) Date de dépôt: 11.02.2016
(51) Int. Cl.: A01K 1/01

(54) **SYSTÈME POUR LA COLLECTE DES DÉJECTIONS S'ÉCOULANT SUR LE SOL D'UNE ENCEINTE POUR L'ÉLEVAGE D'ANIMAUX**
SYSTEM ZUM SAMMELN VON KOTENTLEERUNGEN AUF DEM BODEN EINES GEHEGES IN DER TIERZUCHT
SYSTEM FOR COLLECTING DEJECTIONS FLOWING ON THE FLOOR OF AN ENCLOSURE FOR RAISING ANIMALS

(30) Priorité: 11.02.2015 FR 1551102
(43) Date de publication de la demande: 20.12.2017
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2016/050315
(87) Numéro de publication internationale: WO 2016/128684

(56) Documents cités:
- EP-A1- 1 719 404
- DE-A1- 19 601 478
- DE-C1- 19 519 088
- GB-A- 1 246 590
- GB-A- 1 395 072

## Description

### DOMAINE TECHNIQUE AUQUEL SE RAPPORTE L'INVENTION

La présente invention concerne un système pour la collecte des déjections (notamment des liquides) s'écoulant sur le sol d'une enceinte pour l'élevage d'animaux, par exemple de bovins (bovins laitiers et/ou bovins à viande), en particulier pour l'aménagement des couloirs de circulation d'une telle enceinte d'élevage.

### ARRIERE-PLAN TECHNOLOGIQUE

Le confort des animaux constitue un paramètre déterminant dans le rendement d'un élevage, qui influence notamment la santé, la prise alimentaire, la fertilité et la longévité des animaux.

Ce confort des animaux est régi en particulier par des obligations légales qui sont définies dans les Traités d'Amsterdam (1999) et de Lisbonne (2009) relatifs au Protocole sur la protection et le bien-être des animaux, ainsi que par l'adoption de la seconde stratégie européenne pour le bien-être animal.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique, les systèmes de « châsse d'eau » et les systèmes de caillebotis.

Dans le cadre d'une solution par « évacuation mécanique », les déjections présentes sur le sol sont raclées une à plusieurs fois par jour par un dispositif de raclage dénommé rabot (manœuvré par un tracteur ou par des moyens automatiques), pour être amenées jusqu'à une fosse de collecte située hors du bâtiment d'élevage.

Toutefois, la séparation des urines et des fèces n'est pas optimale au sein d'un tel système d'évacuation, constituant ainsi une source importante d'ammoniac. De plus, l'installation d'un tel système d'évacuation implique des travaux de gros œuvre importants, qui sont difficiles à envisager dans une enceinte d'élevage existante.

Avec une « chasse d'eau », un liquide de chasse évacue énergiquement les déjections dans un caniveau puis vers une fosse extérieure.

Or, là encore, la séparation des urines et des fèces n'est pas optimale au sein d'un tel système d'évacuation, constituant encore une source importante d'ammoniac. De plus, la mise en œuvre d'un tel système conduit à une humidification importante des sols de l'enceinte d'élevage, susceptible de générer des problèmes d'adhérence et d'hygiène.

Plus généralement, un revêtement de sol excessivement humide est susceptible de provoquer des problèmes sanitaires au niveau des pieds des animaux, notamment de boiteries, constituant un trouble majeur de santé en élevage.

Un système pour la collecte des déjections est connu du document DE-A-19601478. Parmi les infections à l'origine de boiteries, la dermatite digitée, encore appelée « maladie de Mortellaro », est la plus problématique.

Il existe par conséquent un besoin de solutions techniques permettant une réduction de l'humidité des surfaces d'appui sur le sol des enceintes d'élevage avec une évacuation efficace des liquides (en particulier des urines), avantageusement cela sans nécessiter des travaux de gros œuvre importants, de sorte à améliorer les conditions d'adhérence et les conditions sanitaires des animaux.

Il existe également un intérêt pour des solutions simples qui permettent éventuellement une certaine séparation des urines et des fèces, de manière à limiter la production d'ammoniac dans les enceintes d'élevage.

### OBJET DE L'INVENTION

Dans ce contexte, la demanderesse a développé un nouveau système pour la collecte des déjections s'écoulant sur le sol d'une enceinte pour l'élevage d'animaux, visant à améliorer les conditions d'hygiène dans une enceinte d'élevage, notamment par une gestion optimale des liquides.

Le système de collecte selon l'invention est caractérisé par le fait qu'il comprend les caractéristiques de la revendication 1.

Un tel système permet une évacuation automatique et continue des déjections (notamment des urines) depuis la surface supérieure d'appui, jusqu'auxdits conduits.

La surface supérieure d'appui du revêtement de sol reste ainsi en permanence relativement peu humide, participant ainsi à améliorer les caractéristiques qualitatives du sol sur le plan de l'adhérence et de l'hygiène.

Cette structure permet également une séparation rapide et relativement efficace des urines par rapport aux fèces, pour limiter la production d'ammoniac au sein de l'enceinte d'élevage.

En effet, les urines vont tendre à être évacuées vers les conduits, pour leur entrainement par les moyens de convoyage ; les fèces vont quant à elles tendre à rester sur la surface supérieure d'appui, pour leur évacuation par raclage mécanique (par exemple avec un rabot) ou par raclage aqueux (par exemple hydrocurage).

Un tel système selon l'invention est en plus adapté à être implanté de manière simple au sein d'une enceinte d'élevage nouvelle ou existante (amélioration ou rénovation), cela sans nécessiter la mise en œuvre de travaux de gros œuvre importants.

La surface supérieure d'appui moins humide permet aussi à l'onglon des bovins d'être plus dur, ce qui participe à la bonne santé du pied de ces animaux et qui contribue à diminuer les risques de glissades des animaux.

Dans cet environnement moins humide et moins productif en ammoniac, le niveau bactérien et les pics de prolifération sont maintenus bas, ce qui rend la lutte contre les maladies du pied beaucoup plus simple.

Un tel système de collecte est en plus particulièrement intéressant dans le cas d'un sol recouvert de paille.

En effet, la couche supérieure maintient les matières solides (notamment la paille et les fèces) au niveau de sa surface supérieure ; ainsi, ces matières solides sont susceptibles d'être raclées pour le nettoyage de ladite couche supérieure. Les moyens de convoyage sont ainsi protégés efficacement au sein des conduits, sans risque (ou tout au moins en réduisant les risques) d'interagir avec les matières solides de sorte à assurer un phénomène de circulation optimal pour les déjections dans les conduits respectifs.

La couche supérieure présente encore deux avantages potentiels :
- une protection des moyens de convoyage manœuvrés dans les conduits, et
- un masquage visuel des moyens de convoyage manœuvrés dans les conduits, de sorte à éviter une perturbation des animaux.

Selon d'autres caractéristiques de réalisation avantageuses, pouvant être prises indépendamment ou en combinaison :
- le revêtement de sol comporte une surface de réception recouverte par ladite couche supérieure, laquelle surface de réception comporte des portions supports qui sont séparées les unes des autres par des rainures comportant chacune une ouverture supérieure obturée par ladite couche supérieure pour former lesdits conduits ; dans ce cas, de préférence, la couche supérieure consiste en une feuille rapportée sur ladite surface de réception ; en pratique, une telle surface de réception est avantageusement constituée par une chape réalisée en bitume ou en béton, dans laquelle sont ménagées lesdites rainures, ou par un ensemble de longerons qui sont solidarisés avec une surface support, cela de manière juxtaposée et tout en préservant un espacement définissant lesdites rainures, ou par un tapis comportant une embase dont une face inférieure est destinée à reposer sur une surface support, et dont une face supérieure est munie de structures saillantes ménagées à distance les unes des autres, qui délimitent entre elles lesdites rainures et dont la face libre forme la portion d'appui ;
- le revêtement de sol comporte au moins un tapis comportant une embase formant la couche supérieure, dont une première face forme la surface supérieure adaptée à l'appui des animaux, et une seconde face est munie de structures saillantes ménagées à distance les unes des autres, qui délimitent entre elles des rainures comportant chacune une ouverture longitudinale et dont la face libre est apte à reposer sur une surface support pour participer à délimiter lesdits conduits ; de préférence, la première face est également adaptée à reposer sur la surface support et la face libre des structures saillantes est également adaptée à former la surface supérieure adaptée à l'appui des animaux ;

- le matériau de la couche supérieure est choisi parmi les matériaux élastomères ou les matériaux plastiques élastomères ;
- la surface supérieure de la couche supérieure comporte un relief pour favoriser l'adhérence ;
- la couche supérieure a une épaisseur comprise entre 2 et 8 mm ;
- les orifices traversants de la couche supérieure ont une forme allongée, avec une largeur et une longueur comprises entre 5 mm et 120 mm ;

Selon un mode de réalisation particulier, les moyens pour convoyer les déjections comprennent :
- des organes d'entrainement qui sont chacun rapportés dans l'un desdits conduits, lesquels organes d'entrainement comportent chacun une surface de convoyage qui est apte à convoyer les déjections présents au sein du conduit associé, et
- des moyens pour la manœuvre desdits organes d'entraînement au sein de leurs conduits respectifs, de sorte que ladite surface de convoyage génère ladite circulation de liquide au sein de son conduit.

Dans ce cas, de préférence, les organes d'entrainement sont répartis sur la longueur d'au moins un corps allongé, et les moyens de manoeuvre consistent en des moyens pour la manoeuvre en translation dudit au moins un corps allongé, en sens unique ou en oscillation, ou l'un au moins des organes d'entrainement consiste en un organe en forme de vis formant une surface de convoyage hélicoïdale, et les moyens de manœuvre consistent en des moyens pour la manoeuvre en rotation dudit au moins un organe d'entrainement en forme de vis.

Encore de manière générale :
- le système de collecte comporte encore des moyens pour une alimentation des conduits avec un liquide de traitement ;
- les conduits sont rectilignes et s'étendent parallèlement les uns par rapport aux autres ; dans ce cas, les conduits ont avantageusement chacun une largeur comprise entre 15 et 50 mm et une hauteur comprise entre 15 et 50 mm, et les conduits sont espacés d'une largeur comprise entre 50 et 500 mm ;
- le système de collecte comporte encore des moyens pour le raclage de la surface supérieure de la couche supérieure.

La présente invention concerne encore une enceinte d'élevage équipée d'un système de collecte selon la revendication 11.

De préférence, cette enceinte d'élevage comporte un couloir de circulation comportant un axe longitudinal et recouvert par un revêtement de sol ; et les conduits dudit revêtement de sol sont agencés parallèlement, ou au moins approximativement parallèlement, par rapport audit axe longitudinal.

### DESCRIPTION DETAILLEE DE L'INVENTION

La présente invention sera encore illustrée, sans être aucunement limitée, par la description suivante de différents modes de réalisation particuliers, en relation avec les dessins annexés dans lesquels :
- la figure 1 représente, de manière schématique et selon un plan de coupe vertical, une partie d'un système de collecte des déjections conforme à l'invention, dont le revêtement de sol comporte des conduits qui sont formés par une couche supérieure rapportée sur un tapis élastique muni de rainures et dans lequel sont ménagées des chambres longitudinales étanches ;
- la figure 2 illustre le système de collecte de la figure 1, dont les chambres longitudinales étanches contiennent un fluide destiné à participer à la déformation élastique de la surface supérieure d'appui ;
- la figure 3 est une vue de dessus du revêtement de sol illustré sur les figures 1 et 2, montrant schématiquement la surface supérieure d'appui formée par la couche supérieure et au niveau de laquelle sont ménagés les orifices traversants débouchant dans les conduits de collecte ;
- la figure 4 est une vue de dessus du revêtement de sol illustré sur les figures 1 et 2, dont la couche supérieure n'est pas représentée pour accéder visuellement aux moyens pour convoyer les déjections qui sont du type chaîne avec des éléments rapportés pour former les organes d'entrainement des déjections ;
- la figure 5 représente, de manière schématique et selon un plan de coupe vertical, un autre mode de réalisation du revêtement de sol dont la couche supérieure est rapportée sur un ensemble de longerons mono-matière solidarisés sur une surface support ;
- la figure 6 illustre une variante de réalisation du revêtement de sol selon la figure 5, dans laquelle les longerons sont bi-matière ;
- la figure 7 représente, de manière schématique et selon un plan de coupe vertical, encore un autre mode de réalisation du revêtement de sol dont la couche supérieure est rapportée sur une chape dans laquelle sont directement ménagées les rainures ;
- la figure 8 représente, de manière schématique et selon un plan de coupe vertical, toujours un autre mode de réalisation d'un revêtement de sol dont les rainures comportent maintenant une face de fond à section en arc de cercle ;
- la figure 9 est également une vue de dessus du revêtement de sol selon les figures 1 à 8, dont la couche supérieure n'est pas représentée pour accéder visuellement aux moyens pour convoyer les déjections qui consistent en des cordes ;
- la figure 10 est encore une vue de dessus du revêtement de sol selon les figures 1 à 8, dont la couche supérieure n'est pas représentée pour accéder visuellement aux moyens pour convoyer les déjections qui comprennent des organes d'entraînement manœuvrables selon un mouvement oscillant ;
- la figure 11 est toujours une vue de dessus du revêtement de sol selon les figures 1 à 8, dont la couche supérieure n'est pas représentée pour accéder visuellement aux moyens pour convoyer les déjections qui consistent en des vis manœuvrables en rotation ;
- la figure 12 est une vue générale et en perspective d'un système de collecte dans lequel des tapis forment la couche supérieure et dans laquelle sont ménagés les orifices traversants débouchant dans les conduits de collecte ;
- la figure 13 est une vue partielle et agrandie de la figure 12, pour montrer plus en détails la structure des tapis ;
- la figure 14 est une vue en coupe de l'un des tapis formant la couche supérieure équipant le revêtement de sol selon les figures 12 et 13.

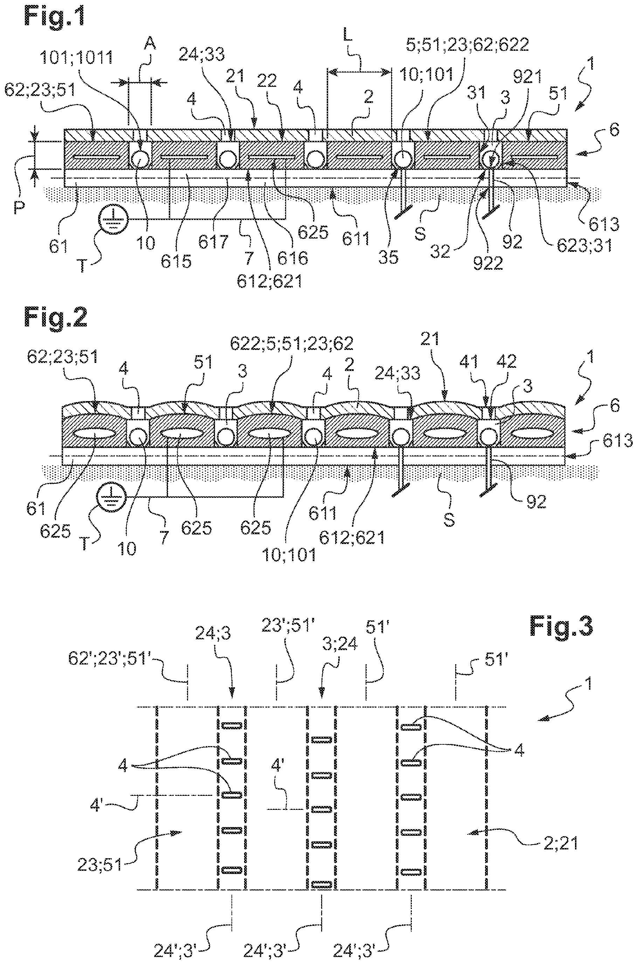

Les systèmes de collecte selon l'invention, représentés sur les figures 1 à 14, sont tout particulièrement adaptés à équiper une enceinte pour l'élevage d'animaux.

Tel que développé ci-après, de tels systèmes de collecte ont pour intérêt de collecter les déjections s'écoulant sur le sol et de les évacuer, de sorte à offrir une surface d'appui relativement sèche (ou au moins ne présentant pas une humidité excessive) pour les pieds des animaux, et donc plus saine et plus sécurisante.

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte d'élevage (non représentée) consiste en un bâtiment délimité par un bâti, adapté à l'élevage souhaité (par exemple une étable dans le cas de bovins).

### Revêtement de sol

Le système de collecte selon l'invention comprend un revêtement de sol 1 qui recouvre une partie au moins du sol de cette enceinte d'élevage.

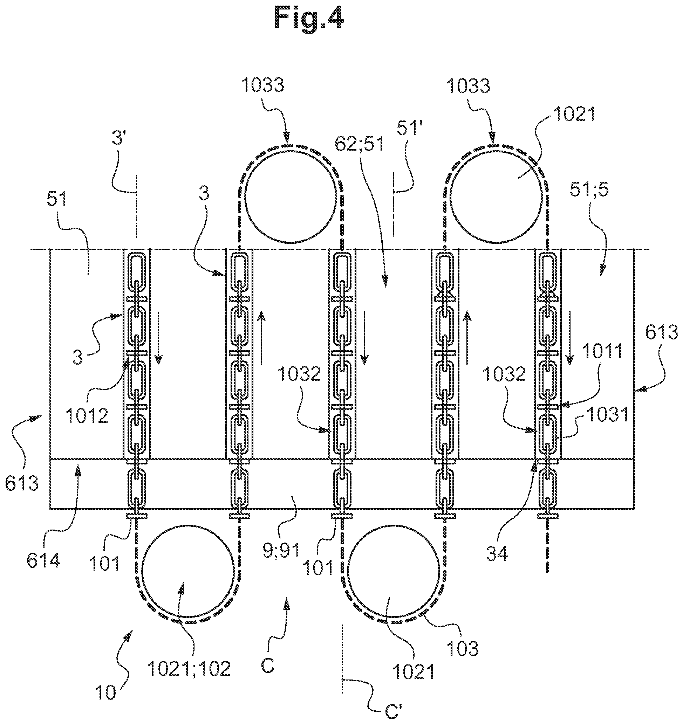

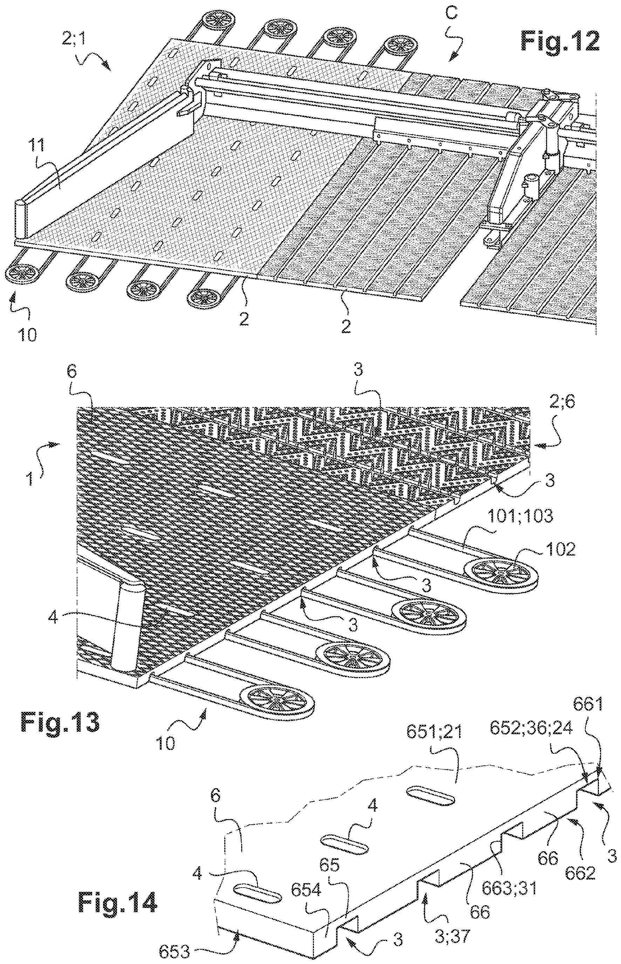

En particulier, le revêtement de sol 1 est avantageusement implanté au niveau des couloirs de circulation C (figures 4 et 12) qui sont empruntés par les animaux cheminant entre les différents espaces fonctionnels de l'enceinte d'élevage (par exemple logettes, salles de traite, etc.).

Ce revêtement de sol 1 est apte à récupérer les liquides s'écoulant sur le sol et à les séparer par rapport aux matières solides (par exemple les fèces, la paille, etc.) en continu et par gravité.

Pour cela, tel qu'illustré notamment sur les figures 1, 2, 5 à 8 et 12 à 14, le revêtement de sol 1 correspondant comprend :
- une couche supérieure 2, dite encore « couche de couverture », réalisée dans un matériau apte à subir une déformation élastique et comportant une surface supérieure 21 adaptée à l'appui des animaux (formant la surface supérieure de ce revêtement de sol 1),
- des conduits 3 ménagés sous ladite couche supérieure 2, adaptés à recevoir les déjections, et
- des orifices traversants 4, ménagés au travers de ladite couche supérieure 2, s'étendant entre la surface supérieure 21 de ladite couche supérieure 2 et lesdits conduits 3, pour l'écoulement des liquides par gravité depuis ladite surface supérieure 21 jusqu'auxdits conduits 3.

En pratique, tout ou partie des matières solides sont éventuellement destinées à traverser également les orifices traversants 4 de sorte à cheminer le long des conduits 3 sous l'effet des moyens de convoyage décrits par la suite.

Ce revêtement de sol 1 peut être réalisé :
- mono-matériau, par exemple un même matériau formant la couche supérieure 2 et définissant les conduits 3 (figures 12 à 14), ou
- multi-matériaux, par exemple un premier matériau formant la couche supérieure 2 et un second matériau formant une surface de réception 5 recevant cette couche supérieure 2.

Selon un mode de réalisation (figures 1 à 11), la couche supérieure 2 consiste en une feuille (ou bande) qui recouvre une surface de réception 5 comportant une pluralité de portions supports 51 séparées les unes des autres par des rainures obturées par la couche supérieure 2 pour former les conduits 3 précités.

Selon un autre mode de réalisation (figures 12 à 14), le revêtement de sol 1 comporte des tapis 6 comportant une embase 65 formant la couche supérieure 2, dont :
- une première face 651 forme la surface supérieure 21 adaptée à l'appui des animaux, et
- une seconde face 652 est munie de structures saillantes 66 ménagées à distance les unes des autres, qui délimitent entre elles des rainures 3 et dont la face libre 652 est apte à reposer sur une surface support S pour former les conduits 3.

Dans un souci de simplification, les termes « conduits » et « rainures » sont utilisés indifféremment, et sont désignés par le même repère numérique « 3 ».

### Sur les conduits/rainures

Les conduits 3 consistent ici en des structures fermées, de forme générale tubulaire.

Ces conduits 3 sont formés ici à partir de rainures constituant des structures de genre rigoles ou gouttières qui sont sous-jacentes de la couche supérieure 2 et qui sont obturées par cette couche supérieure 2.

Ces rainures (ou conduits) 3 sont aptes à collecter (par gravité) et à contenir les liquides s'écoulant sur le revêtement de sol 1, de sorte que ces liquides stagnent le moins possible sur la surface supérieure d'appui 21 de la couche supérieure 2.

Par « liquides », on entend en particulier les déjections liquides produites par les animaux de l'élevage, en particulier leur urine.

Pour cela, comme décrit ci-dessous notamment en relation avec la figure 1, chaque rainure 3 est délimitée par deux faces latérales 31 qui sont raccordées par une face de fond 32 et qui délimitent une ouverture supérieure 33 s'ouvrant vers le haut, sous la couche supérieure 2.

De manière alternative, comme décrit ci-dessous notamment en relation avec la figure 14, chaque rainure 3 est délimitée par deux faces latérales 31 qui sont raccordées par une face de dessus 36 (partie de la couche supérieure 2) et qui délimitent une ouverture inférieure 37 s'ouvrant vers le bas.

Chaque rainure (ou conduit) 3 est en plus terminée par deux extrémités ouvertes 34 (seule l'une d'elles est visible sur la figure 4), autorisant un écoulement et une évacuation du liquide.

Les deux faces latérales 31 s'étendent ici parallèlement, ou au moins approximativement parallèlement, l'une par rapport à l'autre.

Sur les figures 1 à 7, la face de fond 32 consiste en une face de fond plane, s'étendant entre les deux faces latérales 31.

Chaque bordure latérale de la face de fond 32 est ici raccordée à une bordure inférieure d'une face latérale 31 par l'intermédiaire d'un chanfrein 35 (ou pan coupé) de manière à limiter les angles susceptibles de retenir des salissures.

Ces chanfreins 35 s'étendent selon un angle compris entre 40° et 50° (par exemple de l'ordre de 45°), par rapport à la face de fond 32.

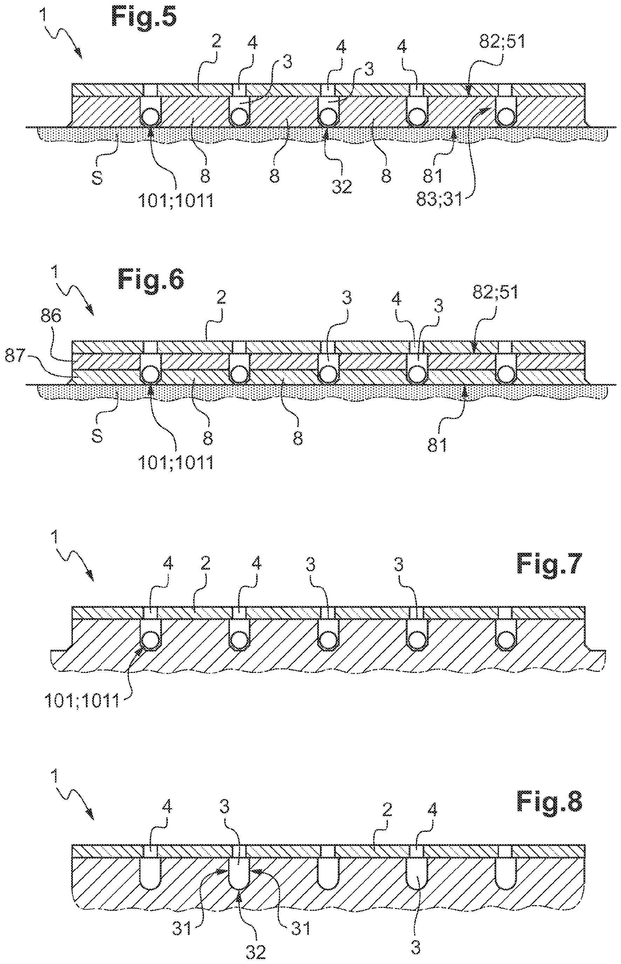

De manière alternative, tel qu'illustré sur la figure 8, la face de fond 32 des rainures 3 peut présenter un aspect courbe concave, par exemple une section en arc de cercle.

En outre, ces rainures 3 ont avantageusement des dimensions particulières pour permettre une collecte efficace des liquides.

A cet égard, comme illustré sur la figure 1, chaque rainure 3 peut être définie par deux dimensions :
- une largeur A, correspondant à la distance séparant ses deux faces latérales 31 en regard, et
- une profondeur P, correspondant à la distance maximale séparant, d'une part, sa face de fond 32 et, d'autre part, les portions support 51 attenantes.

En l'espèce, les rainures 3 ont avantageusement chacune :
- une largeur A d'au maximum 50 mm, de préférence comprise entre 15 et 50 mm, et
- une profondeur P d'au minimum de 15 mm, avantageusement comprise entre 15 et 50 mm.

Les rainures 3 sont avantageusement régulièrement espacées, les unes par rapport aux autres, sur le revêtement de sol 1. En d'autres termes, ces rainures 3 sont avantageusement régulièrement réparties sur le revêtement de sol 1.

De préférence, tel qu'illustré sur les figures 3 et 4, les rainures 3 sont rectilignes et s'étendent parallèlement les unes par rapport aux autres.

Chaque rainure 3 comporte ainsi un axe longitudinal 3', s'étendant parallèlement à ses faces latérales 31 ; les axes longitudinaux 3' des différentes rainures 3 s'étendent parallèlement les uns aux autres.

Les rainures 3 sont réparties sur la largeur du revêtement de sol 1 ; et ces rainures 3 s'étendent sur toute la longueur du revêtement de sol 1.

### Sur la couche supérieure

La couche supérieure 2 est réalisée dans un matériau choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

L'épaisseur de cette couche supérieure 2, correspondant le cas échéant à la distance séparant ses surfaces supérieure 21 et inférieure 22, est comprise entre 2 et 8 mm.

Du fait des rainures 3, la couche supérieure 2 comprend différentes parties :
- des premières parties 23, s'étendant entre deux rainures 3, et
- des secondes parties 24, s'étendant au-dessus des rainures 3.

Pour l'évacuation des déjections, les orifices traversants 4 sont ménagés au travers de cette couche supérieure 2, et sont répartis au niveau des secondes parties 24 et situées en regard des rainures 3.

Chaque seconde partie 24 comporte plusieurs orifices, régulièrement répartis sur sa longueur.

Chaque orifice traversant 4 comporte ainsi deux extrémités (figure 2) :
- une extrémité supérieure 41, débouchant au niveau de la surface supérieure 21 d'appui, et
- une extrémité inférieure 42, débouchant (le cas échéant au niveau de la surface inférieure 22 et) au niveau de l'une des rainures 3.

Pour une collecte optimale des déjections, chaque orifice traversant 4 a une forme allongée, par exemple oblongue.

Chaque orifice traversant 4 s'étend sur toute la largeur (ou au moins approximativement toute la largeur) de la rainure 3 sous-jacente et de la seconde partie 24 de couche supérieure 2).

Cet orifice traversant 4 comporte :
- un axe longitudinal 4' s'étendant perpendiculairement à l'axe longitudinal 24' de la seconde partie 24 de couche supérieure 2 correspondante (figure 3), ou
- un axe longitudinal 4' s'étendant parallèlement à l'axe longitudinal 24' de la seconde partie 24 de couche supérieure 2 correspondante (figure 13).

Par exemple, la largeur et la longueur de chaque orifice traversant 4 sont comprises entre 5 mm et 120 mm, avantageusement entre 5 mm et 30 mm.

La répartition et la densité de ces orifices traversants 4 sont adaptées à façon sur chaque seconde partie 24 de la couche supérieure 2.

Cette répartition et cette densité peuvent en particulier tenir compte de la densité en animaux dans le bâtiment d'élevage.

La surface supérieure 21 de cette couche supérieure 2 comporte avantageusement un relief pour favoriser l'adhérence (non représenté).

Le relief antidérapant consiste par exemple en un relief monobloc choisi parmi les reliefs utilisés dans les revêtements de sols mis en œuvre de manière classique dans les bâtiments d'élevage, par exemple des éléments saillants en forme de losanges munis de bossages.

La surface supérieure 21 comportent encore avantageusement une couche d'un matériau abrasif, afin de permettre et/ou de favoriser l'usure des sabots et la santé du pied des animaux.

Pour obtenir cette couche de matériau abrasif, le matériau abrasif est avantageusement mélangé avec le matériau constitutif de la couche supérieure 2.

Le matériau abrasif consiste par exemple en des particules de quartz, de métal ou de toute autre matière ayant un pouvoir abrasif sur l'onglon des vaches.

Ce matériau abrasif est rapporté avant, pendant ou après la fabrication de la couche supérieure 2.

### Sur la couche supérieure rapportée

Selon le mode de réalisation des figures 1 à 11, la couche supérieure 2 est du type rapportée.

Cette couche supérieure 2 comporte la surface supérieure 21 et une surface inférieure 22 recouvrant la surface de réception 5.

Les rainures 3 délimitent ainsi entre elles une pluralité de portions supports 51 qui ont chacune la forme d'une bande rectiligne.

Chaque portion support 51 comporte ainsi un axe longitudinal 51', s'étendant parallèlement à l'axe longitudinal 3' des rainures 3 et à l'axe longitudinal 51' des autres portions supports 51 (figure 4).

Les portions supports 51 de la surface de réception 5 s'étendent entre deux rainures 3, et avantageusement dans un même plan ou au moins approximativement dans un même plan.

Ces portions supports 51 ont de préférence une surface plane horizontale (figure 1) ou une surface courbe convexe (figure 2).

Ces portions supports 51 ont de préférence une largeur L comprise entre 50 et 500 mm, et encore de préférence comprise entre 10 et 300 mm.

Du fait de la surface de réception 5 discontinue, la couche supérieure 2 comprend différentes parties :
- des premières parties 23 qui recouvrent chacune l'une des portions supports 51 de la surface de réception 5, et
- des secondes parties 24, reliant deux portions supports 51 au-dessus des rainures 3 (en «suspension» entre deux portions supports 51), qui obturent chacune l'ouverture supérieure 33 de l'une des rainures 3 pour former ensemble l'un des conduits 3 précités.

Ces premières parties 23 et secondes parties 24 de la couche supérieure 2 ont chacune la forme d'une bande rectiligne.

Chaque partie 23, 24 comporte ainsi un axe longitudinal 23', 24' qui s'étend parallèlement, respectivement, à l'axe longitudinal 51' des portions supports 51 et à l'axe longitudinal 3' des rainures 3 (figure 3).

### Sur la surface de réception

De manière générale, la structure de la surface de réception 5, participant à former le revêtement de sol 1 selon l'invention, peut prendre différentes formes de réalisation.

### Première forme de réalisation de la surface de réception

Selon une première forme de réalisation illustrée sur les figures 1 et 2, la surface de réception 5 est constituée par la face supérieure d'un tapis 6 en matériau élastomère, destiné à être rapporté sur une surface support S de l'enceinte d'élevage.

La surface de réception 5 de ce tapis 6 est ainsi destinée à subir une déformation élastique, participant au déplacement confortable des animaux.

La surface support S de cette enceinte d'élevage consiste avantageusement en une chape (ou une dalle) en béton, éventuellement armée avec un treillis métallique, ou en bitume.

Ce tapis 6 consiste en une bande allongée comportant une embase 61 dont :
- une face inférieure 611 est destinée à reposer sur la surface support S,
- une face supérieure 612 est munie de structures saillantes 62 ménagées à distance les unes des autres, et
- le contour périphérique est délimité par deux bordures latérales 613 et par deux bordures d'extrémité 614 (seule l'une de ces bordures d'extrémité 614 est visible sur la figure 4).

Les structures saillantes 62 ont chacune une forme allongée, du type longeron ou chevron, régulièrement réparties sur la largeur de l'embase 61 et s'étendant parallèlement à ses bordures latérales 613 (figures 1 et 2).

Ces structures saillantes 62 comportent chacune :
- une face inférieure 621 qui est solidarisée avec la face supérieure 612 de l'embase 61,
- une face supérieure libre 622 formant l'une des portions supports 51, et
- deux faces latérales 623 formant les faces latérales 31 des rainures 3.

Chaque structure saillante 62 a avantageusement - une hauteur P comprise entre 15 et 50 mm et - une largeur L comprise entre 50 et 500 mm.

Deux structures saillantes 62 juxtaposées délimitent, entre elles, l'une des rainures 3 du tapis 6.

Ces rainures 3 sont là encore régulièrement réparties sur la largeur de l'embase 61 et s'étendant parallèlement à ses bordures latérales 613 (figures 1 et 2).

Ces rainures 3 s'étendent avantageusement sur toute la longueur du tapis 6 (entre les bordures d'extrémité 614 de son embase 61).

Les parties exposées de la face supérieure 612 de l'embase 61, entre deux structures saillantes 62, forment les faces de fond 32 des rainures 3.

Les portions supports 51 sont avantageusement adaptées à subir une déformation en enfoncement, cela d'au moins 1 mm, et de préférence comprise entre 1 et 5 mm, lors de l'appui du pied de l'animal ou d'une personne.

Par « enfoncement », on entend en particulier une diminution de l'épaisseur entre la portion support 51 et la face inférieure 611 de l'embase 61, par rapprochement des surfaces respectives.

Pour cela, la tapis 6 est avantageusement réalisé dans au moins un matériau apte à subir une déformation élastique choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce tapis 6 peut être réalisé :
- mono-matériau, ou
- multi-matériaux, par exemple un premier matériau formant l'embase 61 et un second matériau formant les structures saillantes 62.

De manière à optimiser encore ce phénomène de déformation élastique, chaque structure saillante 62 intègre avantageusement une chambre longitudinale étanche 625 destinée à contenir un fluide (figure 2).

Cette chambre longitudinale étanche 625 s'étend sur toute la longueur, ou au moins approximativement sur tout la longueur, de la structure saillante 62 associée.

Cette chambre longitudinale étanche 625 est avantageusement centrée sur l'axe longitudinal 62' de la structure saillante 62 associée ; elle s'étend en plus sur au moins la moitié, voire les trois quart, de la largeur de la structure saillante 62 correspondante.

Le fluide consiste en un gaz (air par exemple), un liquide (eau par exemple), un gel, ou leur mélange.

Chaque chambre étanche 625 comporte avantageusement un conduit d'accès (non représenté), notamment pour son remplissage ou sa vidange.

Une fois les chambres longitudinales étanches 625 remplies par le fluide, les portions supports 51 ont avantageusement une forme légèrement bombée convexe (figure 2).

Les premières parties 23 de la couche supérieure 2, recouvrant les portions supports 51, ont alors également une forme légèrement bombée convexe (figure 2).

Cette caractéristique structurelle favorise alors le déplacement des déjections en direction des secondes parties 24 de la couche supérieure 2 situées de part et d'autre, participant ainsi à l'écoulement de ces déjections au travers de ses orifices traversants 4 jusqu'aux rainures 3.

De son côté, l'embase 61 a par exemple - une épaisseur comprise entre 2 et 10 mm, - une largeur qui est avantageusement comprise entre 300 et 3000 mm, et - une longueur d'au moins 3 m de long.

Dans le sens de son épaisseur, l'embase 61 comporte ici deux couches, l'une supérieure 615 et l'autre inférieure 616, entre lesquelles est rapportée une couche intercalaire de renfort 617.

La couche intercalaire de renfort 617 est choisie parmi les fibres textiles, de métal ou de tout autre produit apportant la stabilité et/ou la résistance à l'élongation.

Cette couche intercalaire de renfort 617 consiste par exemple en une armature textile servant de renfort, réalisée avantageusement en matériau choisi parmi le nylon, le coton, le polyester, le polyamide ou tout autre textile de renfort.

Ce tapis 6 peut être également apte à diriger les tensions et courants parasites provenant du sol ou du sous-sol, vers des prises de terre T situées à l'extérieur de l'enceinte d'élevage.

Pour cela, le tapis 6 comporte avantageusement un réseau de conducteurs électriques 7 destinés à être connectés électriquement entre, d'une part, les chambres longitudinales étanches 625 ménagées dans les structures saillantes 62 et, d'autre part, lesdites prises de terre T.

Un tel tapis 6, avant sa pose, est avantageusement stocké sous forme de plaques, et de préférence encore sous forme de rouleaux.

Cette dernière forme de réalisation en rouleaux a l'intérêt de permettre une pose simple et rapide du revêtement de sol dans l'enceinte d'élevage par déroulement ; elle permet aussi d'assurer une continuité optimale des rainures 3 pour la récupération efficace des déjections aux extrémités de ces rainures 3.

Ces plaques ou rouleaux ont avantageusement un bord périphérique droit ou rectiligne, ou une structure d'assemblage (type puzzle) facilitant leur solidarisation par emboitement avec une structure d'assemblage complémentaire.

L'embase 61 a une largeur qui est avantageusement comprise entre 300 et 3000 mm, et plus généralement une largeur égale au couloir de circulation équipé.

Un tel tapis 6 peut être fabriqué par assemblage d'un ensemble de pièces superposées, pour former un ensemble du type monobloc, par exemple :
- par vulcanisation d'un ensemble de pièces en matériau élastomère,
- par collage,
- par soudage.

En particulier, dans le cas d'une vulcanisation, pour l'obtention de chacune des chambres longitudinales étanches 625, une pièce intercalaire, par exemple une feuille plastique anti-feu, est introduite entre deux des pièces à vulcaniser de sorte à empêcher leur solidarisation locale.

Plus généralement, le revêtement de sol 1 peut être fabriqué par assemblage d'un ensemble de pièces superposées, notamment la couche supérieure 2 et le tapis 6, pour former un ensemble du type monobloc, par exemple :
- par vulcanisation d'un ensemble de pièces en matériau élastomère,
- par collage,
- par soudage.

### Deuxième forme de réalisation de la surface de réception

Selon un deuxième mode de réalisation illustré sur les figures 5 et 6, la surface de réception 5 est constituée par un ensemble de longerons 8 (ou chevrons) qui sont solidarisés directement (en l'absence d'une embase 61) avec la surface support S.

Ces longerons 8 sont agencés de manière juxtaposée, tout en préservant des espaces entre eux qui sont destinés à définir les rainures 3 souhaitées.

La surface support S consiste là encore en du béton ou du bitume.

Chaque longeron 8 comprend un ensemble de faces :
- une face inférieure 81, destinée à reposer sur la surface support S,
- une face supérieure 82, destinée à former une portion support 51 de la surface de réception 5, et
- deux faces latérales 83, destinées chacune à former l'une des faces latérales 31 d'une rainure 3.

La face de fond 32 des rainures 3 est quant à elle formée par une portion exposée de la surface support S, située entre deux des longerons 8 juxtaposés.

La solidarisation de chaque longeron 8 avec la surface support S est obtenue par exemple par le biais d'une fixation mécanique (pointage, rivetage, etc.) ou d'une fixation chimique (collage notamment).

Selon une première variante de réalisation illustrée sur la figure 5, chaque longeron 8 est réalisé monobloc, par exemple en matériau élastomère ou en matériau plastique similaire à celui décrit ci-dessus en relation avec les figures 1 et 2.

Selon une deuxième variante de réalisation illustrée par la figure 6, chaque longeron 8 est constitué d'au moins deux couches superposées :
- une couche supérieure 86 formant la face supérieure 82 du longeron 8, et
- une couche inférieure 87 formant la face inférieure 81 du longeron 8.

Ces deux couches superposées 86, 87 sont avantageusement solidarisées par vulcanisation, par collage, par soudage ou mécaniquement (pointage ou vissage).

Dans le cadre de ce second mode de réalisation, la couche supérieure 2 est avantageusement solidarisée avec la face supérieure 82 des longerons 8 par vulcanisation, par collage, par soudage ou mécaniquement (pointage ou vissage).

L'intérêt de cette seconde forme de réalisation est la facilité d'installation et la possibilité d'utiliser des produits usagés de différentes épaisseurs.

### Troisième forme de réalisation de la surface de réception

Selon une troisième forme de réalisation selon l'invention illustrée sur la figure 7, la surface de réception 5 est constituée par une chape réalisée en bitume ou en béton, dans laquelle sont ménagées directement les rainures 3.

De telles rainures 3 sont par exemple obtenues - au moyen d'un outil de type matrice, comportant le relief en négatif, appliqué sur le matériau en cours de solidification, ou - par rainurage mécanique d'un sol existant.

Dans le cadre de ce troisième mode de réalisation, la couche supérieure 2 est solidarisée avec la surface de réception 5 par collage, par soudage ou mécaniquement (pointage ou vissage).

Cette solidarisation s'effectue avantageusement sur le pourtour, et au niveau central, de la couche supérieure 2, tenant compte du type de raclage mis en œuvre.

### Tapis formant la couche supérieure

Selon la forme de réalisation illustrée sur les figures 12 à 14, la couche supérieure 2 du revêtement de sol 1 est avantageusement constituée par un tapis 6, avantageusement monobloc, destiné à être rapporté sur une surface support S de l'enceinte d'élevage.

La surface support S de cette enceinte d'élevage consiste avantageusement en une chape (ou une dalle) en béton, éventuellement armée avec un treillis métallique, ou en bitume.

Le tapis 6 selon ces figures 12 à 14 a une structure générale similaire à celui décrit ci-dessus en relation avec les figures 1 et 2.

Ce tapis 6 consiste ainsi en une bande allongée comportant une embase 65 dont :
- une face supérieure 651 est destinée à former la surface supérieure 21 adaptée à l'appui des animaux,
- une face inférieure 652 est munie de structures saillantes 66 ménagées à distance les unes des autres, et
- le contour périphérique est délimité par deux bordures latérales 653 et par deux bordures d'extrémité 654.

Les structures saillantes 66 ont chacune une forme allongée, du type longeron ou chevron, régulièrement réparties sur la largeur de l'embase 65 et s'étendant parallèlement à ses bordures latérales 653 (figure 14).

Ces structures saillantes 66 comportent chacune :
- une face supérieure 661 qui est solidarisée de manière monobloc avec la face inférieure 652 de l'embase 65,
- une face inférieure libre 662 formant une des portions destinées à reposer sur la surface support S, et
- deux faces latérales 663 formant les faces latérales 31 des rainures 3.

Chaque structure saillante 66 a avantageusement - une hauteur P comprise entre 15 et 50 mm et - une largeur L comprise entre 50 et 500 mm.

Deux structures saillantes 66 juxtaposées délimitent, entre elles, l'une des rainures 3 du tapis 6.

En d'autres termes, le tapis 6 consiste en une pièce monobloc comportant deux faces opposées :
- une première face 651, destinée à former la surface supérieure 21 adaptée à l'appui des animaux,
- une seconde face 662, destinée à reposer sur la surface support S et dans laquelle sont ménagées les rainures 3.

Tel que développé par la suite, ce tapis 6 est réversible : les deux faces 651, 662 opposées sont adaptées à former la surface supérieure 21 adaptée à l'appui des animaux et sont adaptées à reposer sur la surface support S.

Chaque rainure 3 est délimitée latéralement par deux faces latérales 31 qui sont raccordées par une face de dessus 36 correspondant à une seconde partie 24 de la couche supérieure 2 et qui délimitent une ouverture inférieure 37 s'ouvrant vers le bas pour être fermée avantageusement par la surface support S.

Ces rainures 3 sont là encore régulièrement réparties sur la largeur de l'embase 65 et s'étendant parallèlement à ses bordures latérales 653 (figures 1 et 2).

Ces rainures 3 s'étendent avantageusement sur toute la longueur du tapis 6 (entre les bordures d'extrémité 654 de son embase 65).

Les parties exposées de la face inférieure 652 de l'embase 65, entre deux structures saillantes 66 (correspondant à une seconde partie 24 de la couche supérieure 2), forment la face de dessus 36 des rainures 3.

Le tapis 6 est avantageusement réalisé dans au moins un matériau apte à subir une déformation élastique choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce tapis 6 peut être réalisé :
- mono-matériau, ou
- multi-matériaux, par exemple un premier matériau formant l'embase 61 et un second matériau formant les structures saillantes 62.

De manière à optimiser encore ce phénomène de déformation élastique, chaque structure saillante 66 peut intégrer une chambre longitudinale étanche destinée à contenir un fluide tel que décrit ci-dessus en relation avec la figure 2.

L'embase 65 a par exemple - une épaisseur comprise entre 2 et 10 mm, - une largeur qui est avantageusement comprise entre 300 et 3000 mm, et - une longueur d'au moins 3 m de long.

Pour l'évacuation des déjections, les orifices traversants 4 sont ménagés au travers de cette embase 65 formant la couche supérieure 2, et sont répartis au niveau des secondes parties 24 et situées en regard des rainures 3.

Les orifices traversants 4 ont une forme générale oblongue, dont l'axe longitudinal s'étend parallèlement à l'axe longitudinal de la rainure 3 associée.

Dans le sens de son épaisseur, l'embase 65 peut comporter une couche intercalaire de renfort telle que décrite ci-dessus.

Un tel tapis 6, avant sa pose, est avantageusement stocké sous forme de plaques, et de préférence encore sous forme de rouleaux.

Cette dernière forme de réalisation en rouleaux a l'intérêt de permettre une pose simple et rapide du revêtement de sol dans l'enceinte d'élevage par déroulement ; elle permet aussi d'assurer une continuité optimale des rainures / conduits 3 pour la récupération efficace des déjections aux extrémités de ces rainures 3.

Ces plaques ou rouleaux ont avantageusement un bord périphérique droit ou rectiligne, ou une structure d'assemblage (type puzzle) facilitant leur solidarisation par emboitement avec une structure d'assemblage complémentaire.

L'embase 65 a une largeur qui est avantageusement comprise entre 300 et 3000 mm, et avantageusement une largeur égale au couloir de circulation équipé.

Un tel tapis 6 peut être fabriqué par assemblage d'un ensemble de pièces superposées, pour former un ensemble du type monobloc, par exemple :
- par vulcanisation d'un ensemble de pièces en matériau élastomère,
- par collage,
- par soudage.

### Généralités

Dans une variante de réalisation des revêtements de sol 1 selon les figures 5 à 7, il est encore possible de recouvrir les longerons 8 (figures 5 et 6) ou la chape (figure 7) avec un film intercalaire réalisé en matériau élastomère, renforcé de fibres, destiné à épouser la surface de réception 5 et les rainures 3.

Les parties du film, épousant les rainures 3, sont avantageusement maintenues au moyen de profilés à section courbe concave (par exemple en arc de cercle) qui sont fixés mécaniquement dans la face de fond 32.

Les parties de film, entre les rainures 3, forment quant à elles les portions supports 51 recouvertes par la couche supérieure 2.

Ce film épouse alors la surface sous-jacente de la couche supérieure 2 de sorte à constituer les portions supports 51 et les rainures 3 de la surface de réception 5.

En pratique, et de manière générale pour les différents modes de réalisation, le revêtement de sol 1 est destiné à constituer le sol d'une enceinte d'élevage.

En l'occurrence, l'enceinte d'élevage comprend un ensemble d'espaces, entourant notamment les logettes, au niveau desquels les animaux sont destinés à circuler et à stationner, désignés encore couloirs de circulation.

Un couloir de circulation C, illustré très schématiquement sur la figure 4, comporte avantageusement un axe longitudinal C'.

Et le revêtement de sol 1 est de préférence installé de sorte que l'axe longitudinal 3' de ses rainures 3 soit agencé parallèlement, ou au moins approximativement parallèlement, par rapport à l'axe longitudinal C' du couloir C.

Cette orientation est en particulier utile pour favoriser l'évacuation des déjections contenus dans les rainures 3 jusqu'à des moyens de collecte 9 équipant l'enceinte d'élevage et qui sont implantés à l'extrémité des couloirs C (figure 4).

Tel qu'illustrée sur les figures 12 et 13, seule une bande latérale du couloir de circulation C comporte un revêtement de sol 1 comprenant des conduits de collecte 3 associés aux moyens de convoyage décrits par la suite.

Une partie centrale de ce couloir de circulation C peut alors être recouverte par des tapis 6 qui ont avantageusement une structure identique, ou au moins similaire, à celle décrite ci-dessus en relation avec les figures 1 et 2 ou 12 à 14.

Ainsi, en substance, ce tapis 6 en partie centrale consiste en une bande allongée comportant une embase 61 dont :
- une face inférieure 611 est destinée à reposer sur la surface support S,
- une face supérieure 612 est munie de structures saillantes 62 ménagées à distance les unes des autres de sorte à définir des rainures 3 s'ouvrant vers le haut.

Les structures saillantes 62 ont chacune une forme allongée, du type longeron ou chevron, régulièrement réparties sur la largeur de l'embase 61 et s'étendant parallèlement à ses bordures latérales 613.

Ces structures saillantes 62 comportent chacune une face supérieure libre 622 formant une des portions de la surface supérieure 21, et
- deux faces latérales 623 formant les faces latérales 31 des rainures 3.

Ainsi, les tapis 6 latéraux et centraux ont avantageusement une structure identique entre eux. Ils sont rapportés dans un sens du type recto-verso (pivotement à 180° l'un par rapport à l'autre).

### Moyens de collecte

Les moyens de collecte 9 comprennent en particulier une fosse 91 (ou un canal de reprise), installée au niveau de l'une au moins des deux extrémités ouvertes 34 des rainures 3 du revêtement de sol 1 (seule l'une d'elles est visible sur la figure 4).

Ces moyens de collecte 9 peuvent encore comporter des conduits 92 pour l'évacuation des déjections (seuls quelques conduits 92 sont représentés sur les figures 1 et 2 dans un souci de simplification).

Les conduits 92 débouchent, d'un côté amont 921, dans les rainures 3 et, d'un côté aval 922, en regard des orifices d'un caillebotis (représenté très schématiquement).

Dans le cas d'un revêtement de sol 1 du type tapis (figures 1 à 4), les conduits 92 sont avantageusement ménagés dans l'épaisseur de son embase 61.

Une pente est avantageusement appliquée au revêtement de sol 1 (et en particulier à ses rainures 3), pour favoriser l'écoulement des fluides collectés en direction des moyens de collecte 9, à savoir la fosse 91 (ou canal de reprise) ou les conduits 92.

### Moyens pour convoyer les déjections

De manière à générer une circulation optimale des déjections en direction de ces moyens de collecte 9, et éventuellement des déjections solides, le système de collecte selon l'invention comprend encore des moyens 10 pour convoyer les liquides (et éventuellement des déjections solides) le long des rainures 3 du revêtement de sol 1.

Les moyens de convoyage 10 sont encore désignés «moyens de poussée ».

En l'espèce, ces moyens de convoyage 10 comprennent pour cela des organes d'entrainement 101 qui sont rapportés dans les rainures 3 et qui sont accouplés avec des moyens de manœuvre 102 pour leur appliquer un mouvement destiné à provoquer le déplacement des déjections dans un sens adapté au sein de ces rainures 3.

### Selon une première famille de réalisation

Selon une première famille de réalisation, telle que représentée schématiquement sur les figures 4, 9 et 10, les moyens de convoyage 10 peuvent comprendre :
- des organes d'entrainement 101 qui sont chacun répartis sur la longueur d'au moins un corps allongé 103 rapporté dans et le long des rainures 3, et
- des moyens 102 pour la manœuvre en translation desdits organes d'entraînement 101 au sein de leurs rainures 3 respectives, de sorte que chacun desdits organes d'entrainement 101 génère une circulation de liquide au sein de la rainure 3 associée.

Le corps allongé 103 s'entend parallèlement à l'axe longitudinal 3' de la rainure 3 associée.

Chaque organe d'entrainement 101 constitue ainsi une sorte de rabot ou de racleur, apte à pousser/repousser les déjections présentes au sein de la rainure 3 associée.

Chaque organe d'entrainement 101 a pour cela une bordure périphérique 1011 qui épouse, au moins approximativement, la face de fond 32 et une partie inférieure des faces latérales 31 de la rainure 3 associée.

Cette bordure périphérique 1011, par exemple circulaire, comporte :
- une largeur correspondant, au jeu près, à la largeur A de la rainure 3 associée, ou légèrement inférieure à cette dernière (par exemple compris entre 90 % et 100 % par rapport à la largeur A de la rainure 3), et
- une hauteur inférieure à la hauteur P de la rainure 3 associée.

L'organe d'entrainement 101 s'étend ainsi dans l'épaisseur et l'encombrement de sa rainure 3 (figure 1).

Chaque organe d'entraînement 101 comporte en plus, d'un côté aval, une surface de convoyage 1012 qui est apte à exercer ladite poussée/traction recherchée sur le liquide en présence.

Ces organes d'entrainement 101 sont par exemple espacés d'une distance comprise entre 50 et 1000 mm, avantageusement réglable suivant le nombre d'animaux en présence et le type de déjection.

Ces organes d'entrainement 101 peuvent prendre différentes formes de réalisation, notamment en fonction du type de manœuvre en translation qui leur est appliqué.

Par exemple, les organes d'entrainement 101 peuvent être manœuvrés :
- selon une direction parallèle à l'axe longitudinal 3' de leurs rainures 3 respectives et
- dans un unique sens de translation (amont vers aval) au sein de chaque rainure 3.

Dans ce cas, selon une première forme de réalisation représentée sur la figure 4, le corps allongé 103 consiste en une chaîne constituée de plusieurs maillons 1031 assemblés entre eux.

Certains de ces maillons 1031 comportent les organes d'entrainement 101 qui consistent en des pièces saillantes rapportées (par exemple des pièces aptes à limiter les frottements et à résister à l'abrasion, notamment en polyuréthane ou en polyéthylène haute densité).

Ces organes d'entraînement 101 consistent par exemple en des disques qui sont orientés perpendiculairement à l'axe longitudinale 3' de la rainure 3 associée.

De manière alternative, non représentée, les organes d'entrainement sont formés directement par les maillons 1031 de ladite chaîne 103.

Certains au moins des maillons 1031 comportent alors pour cela des parties saillantes qui sont agencées pour former une surface de convoyage 1012.

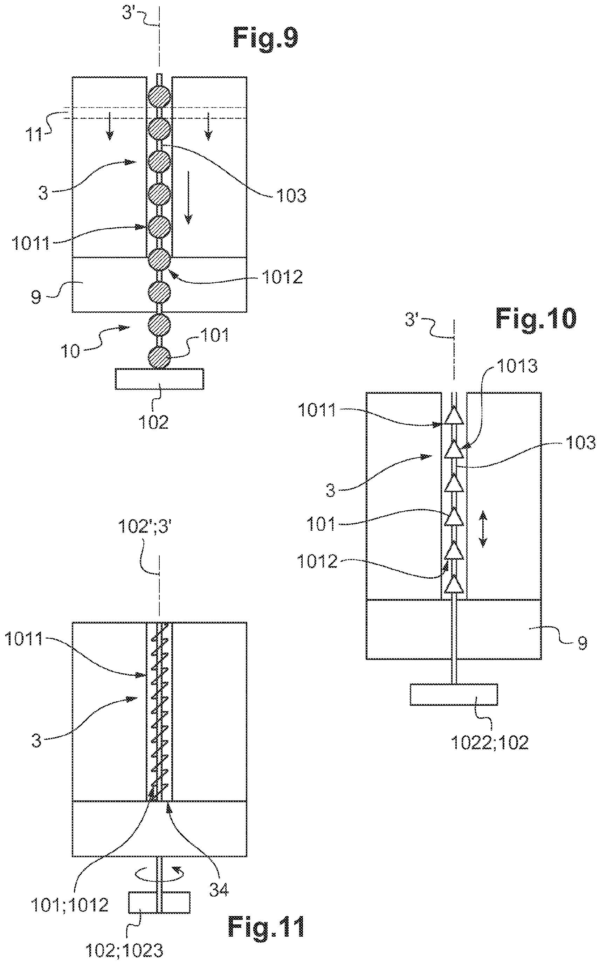

Selon une deuxième forme de réalisation représentée schématiquement sur la figure 9 (seule une rainure 3 est représentée dans un souci de simplification), le corps allongé 103 consiste en une corde.

Les organes d'entrainement 101 consistent alors avantageusement en des nœuds qui sont répartis sur la longueur de ladite corde 103 et qui forment chacun l'une des surfaces de convoyage 1012.

Pour assurer la manœuvre en sens unique de translation dans chaque rainure 3, les moyens de convoyage 10 comporte ici un unique corps allongé 103 (par exemple la chaîne ou la corde), continu, s'étendant au sein de chacune des rainures 3 (figure 4).

Ce corps allongé 103 comporte ainsi des brins actifs 1032 qui s'étendent chacun au sein de l'une des rainures 3 et qui sont raccordés par des brins de jonction 1033 s'étendant entre deux des brins actifs 1032 successifs (figure 4).

Le corps allongé 103 comporte encore un brin retour (non représenté), pour la fermeture et la continuité dudit corps allongé 103.

Dans ce cas, les moyens de manœuvre 102 comprennent avantageusement un ensemble de poulies 1021 coopérant chacune avec l'un des brins de jonction 1033 pour guider le corps allongé 103 entre deux rainures 3 et au sein de ces rainures 3.

Les poulies 1021 sont en particulier agencées ici de sorte que le corps allongé 103 forme un ensemble d'aller retour (ou une forme générale de S) au sein des rainures 3 successives.

L'une au moins de ces poulies 1021 est motorisée pour assurer le cheminement du corps allongé 103.

La vitesse de cheminement est par exemple comprise entre 1 et 10 m/min, notamment suivant la concentration en animaux au m² et le type de déjection.

Deux brins actifs 1032 successifs cheminent ainsi dans des sens inverses l'un par rapport à l'autre.

En d'autres termes, un brin actif 1032 d'une rainure 3 chemine depuis une première extrémité vers une seconde extrémité du revêtement de sol 1, et inversement pour les brins actifs 1032 juxtaposés (comme illustré par les flèches sur la figure 4).

Les organes d'entrainement 101 associés sont ainsi destinés à cheminer successivement sur la longueur de chacune des rainures 3 du revêtement de sol 1, depuis une rainure 3 amont (à gauche sur la figure 4) jusqu'à une rainure 3 aval (à droite sur la figure 4), avant de revenir à la rainure amont précitée.

Les liquides sont ainsi évacués alternativement au niveau de l'une des deux extrémités ouvertes 34 des rainures 3, en regard desquels sont ménagés une fosse ou un canal de reprise 91.

Dans chaque rainure 3, le liquide est mis en circulation dans un sens identique au sens de cheminement des organes d'entrainement 101.

De manière alternative non représentée, les moyens de convoyage 10 peuvent encore se composer de plusieurs corps allongés 103 qui sont chacun munis d'organes d'entrainement 101 agencés en série sur leurs longueurs respectives.

Chaque corps allongé 103 coopère alors avec un groupe de rainures 3 et avec des moyens de manoeuvre 1021 pour assurer son déplacement dans les rainures 3 correspondantes.

Par exemple, chaque corps allongé 103 peut comporter deux brins actifs 1032 qui s'étendent chacun au sein de deux rainures 3 juxtaposées et qui sont raccordés par deux brins de jonction 1033 s'étendant entre ces deux brins actifs 1032 successifs.

Les deux brins actifs 1032 successifs cheminent ainsi dans des sens inverses l'un par rapport à l'autre.

Un tel mode de réalisation permet d'appliquer des vitesses différentes à chaque corps allongé 103, tenant compte notamment de la quantité de matière à évacuer.

Il est ainsi possible d'appliquer une vitesse supérieure aux corps allongés 103 qui se trouvent au sein des rainures 3 bordant des logettes.

Selon une autre variante (figure 10), les organes d'entrainement 101 peuvent être manœuvrés selon :
- une direction parallèle à l'axe longitudinal 3' de leurs rainures 3 respectives et
- un mouvement oscillant aval-amont (amont vers aval et aval vers amont) au sein de leurs rainures 3 respectives.

Seuls les organes d'entrainement 101 d'une rainure 3 sont représentés dans un souci de simplification.

Dans ce cas, les organes d'entrainement 101, répartis sur un corps allongé 103 rigide, comportent chacun deux surfaces opposées :
- une surface aval 1012 constituant la surface de convoyage apte à provoquer le cheminement du liquide à évacuer de l'amont vers l'aval, et
- une surface amont 1013 qui présente un phénomène de poussée réduit (voire nul) sur les liquides lors du mouvement retour aval vers amont.

Pour cela, la surface aval 1012 s'étend par exemple dans un plan perpendiculaire à l'axe longitudinal 3' des rainures 3 associées.

Et la surface amont 1013 a par exemple une forme profilée de l'aval vers l'amont, par exemple diédrique ou conique.

Pour assurer une telle manoeuvre en oscillation, les moyens de manoeuvre 1022 consistent avantageusement en un système bielle/piston.

La vitesse de cheminement est par exemple comprise entre 1 et 10 m/min, adaptée notamment en fonction de la concentration en animaux au m² et le type de déjection.

### Selon une seconde famille de réalisation

Selon une autre famille de réalisation, les organes d'entrainement 101 peuvent encore être manœuvrés en rotation au sein de leurs rainures 3 respectives (figure 11).

Dans ce cas, ces organes d'entrainement 101 consistent chacun avantageusement en une vis munie d'une surface de convoyage 1012 qui est de forme hélicoïdale et qui s'étend sur tout ou partie de sa longueur.

Cette vis 101 s'étend avantageusement sur toute la longueur d'une rainure 3.

De manière alternative, chaque rainure 3 peut comporter deux vis 101, s'étendant chacune - sur une moitié de sa longueur et - depuis l'une des deux extrémités 34 de cette rainure 3.

Là encore, cet organe d'entrainement 101 du type vis s'inscrit dans un encombrement périphérique 1011 cylindrique qui épouse, au moins approximativement, la face de fond 32 et une partie inférieure des faces latérales 31 de la rainure 3 associée.

Cet encombrement périphérique 1011 a une section circulaire, dont le diamètre correspond, au jeu près, à la largeur A de la rainure 3 associée, ou légèrement inférieure à cette dernière (par exemple compris entre 90% et 100% par rapport à la largeur A de la rainure 3).

L'organe d'entrainement 101 s'étend ainsi dans l'épaisseur et l'encombrement de sa rainure 3.

Les moyens de manoeuvre 1023 consistent alors en des moyens pour la manoeuvre en rotation de chacun de ces organes d'entrainement 101 autour d'un axe 102' s'étendant parallèlement à l'axe longitudinal 3' de la rainure 3 associée.

Ces moyens de manoeuvre 103 consistent par exemple en un motoréducteur et/ou un moteur entraînant un renvoi du type chaines/courroies.

La vitesse de rotation est par exemple comprise entre 10 et 40 tours par minute, suivant la concentration en animaux au m² et le type de déjection.

### Moyens d'alimentation en liquide de traitement

De manière générale, pour une hygiène efficace et une évacuation optimale des déjections, le système de collecte comporte encore avantageusement des moyens pour une alimentation des rainures 3 avec un liquide de traitement (non représentés).

Ces moyens d'alimentation consistent avantageusement en des moyens permettant un écoulement du liquide de traitement directement dans les rainures 3, par exemple un dispositif du type goutte à goutte.

Ces moyes d'alimentation sont alors avantageusement implantés d'un côté amont des rainures 3 (à proximité de l'une au moins de ses extrémités ouvertes 34), tenant compte du sens de cheminement des déjections.

Le liquide de traitement contient par exemple des bactéries d'intérêt et/ou un agent de désinfection.

### Moyens de raclage

De préférence, cette installation de collecte comporte encore des moyens 11 pour le raclage de la surface supérieure 21 de la couche supérieure 2 (représentés schématiquement sur les figures 9 et 12).

Ces moyens de raclage 11 consistent par exemple en un rabot dont la bordure inférieure repose sur la surface supérieure 21 de la couche supérieure 2.

Ce rabot est destiné à être manœuvré en translation sur la longueur du revêtement de sol 1 pour repousser les matières solides (fèces, paille, etc.) présentes sur cette surface supérieure 21, jusqu'aux moyens de collecte 9.

Ces moyens de raclage 11 peuvent être choisis parmi les moyens classiques en soi et connus de l'homme du métier.

Le cas échéant, ces moyens de raclage 11 comportent des dents aptes à racler les rainures 3 qui s'ouvrent vers le haut et dont l'ouverture longitudinale est libre (sans la couche supérieure 2, c'est-à-dire par exemple les tapis 3 centraux de la figure 12).

### Mise en œuvre

En fonctionnement, le revêtement de sol 1 est susceptible de recevoir différentes matières organiques, notamment des déjections (urine, fèces).

La surface supérieure 21 du revêtement de sol 1 peut être recouverte de paille.

Le revêtement de sol 1 permet alors un écoulement des déjections au travers des orifices traversants 4, jusqu'aux conduits 3, évitant ainsi l'accumulation de ces liquides sur la surface supérieure 21 de la couche supérieure 2 qui reste ainsi relativement sèche.

Les matières solides, notamment les fèces et la paille, demeurent sur la surface supérieure 21 de la couche supérieure 2, de sorte à éviter leurs mélanges avec les matières liquides pour limiter la production d'ammoniac au sein de l'enceinte d'élevage et aussi de sorte à éviter que des matières solides viennent s'accrocher avec les moyens de convoyage 10 pour conserver une action optimale sur la mise en circulation des déjections au sein des rainures.

Lors d'un nettoyage de ce revêtement de sol 1, le liquide de nettoyage va également s'écouler dans ces conduits 3, évitant que la surface supérieure 21 reste mouillée de manière excessive.

Ce phénomène permet par conséquent aux animaux de cheminer sur une surface relativement saine, avec un risque de chute réduit et sans humidification de leurs pieds.

L'ensemble des déjections s'écoulant dans les conduits 3 sont alors efficacement évacué vers les moyens de collecte 9 (notamment la fosse 91 ou le canal de reprise) par la mise en œuvre des moyens de convoyage 10 décrits ci-dessus en relation avec les figures 1 à 11.

Comme évoqué, les organes d'entrainement 101 sont mises en mouvement (en sens unique, en oscillation ou en rotation selon le cas) de sorte à générer le cheminement des déjections vers les moyens de collecte 9 dédiés.

Les moyens de convoyage 10 permettent ainsi une circulation et une évacuation active des déjections contenus dans les conduits 3, pour éviter leur stagnation et pour limiter le développement d'ammoniac et de microorganismes dans l'enceinte d'élevage.

Pour un nettoyage optimal de ces conduits 3, le liquide de traitement peut être déversé par l'intermédiaire des moyens d'alimentation précités.

De manière générale, les moyens pour convoyer les déjections 10 décrits ci-dessus peuvent être adaptés à façon au sein de l'un quelconque des revêtements de sol 1 constitutifs du système de collecte selon l'invention.

Encore de manière générale, le revêtement de sol 1 selon l'invention permet ainsi une évacuation rapide et en continu des déjections par rapport à la surface supérieure 21 d'appui et par rapport à l'enceinte d'élevage, ce qui permet un maintien efficace de cette dernière à l'état sec (ou au moins sans excès d'humidité), limitant ainsi les problèmes d'hygiène rencontrés avec les revêtements de sol habituels.

Le revêtement de sol 1 selon l'invention permet également une certaine séparation des liquides qui s'écoulent dans les conduits 3, par rapport aux fèces et à la paille qui restent principalement sur la surface supérieure 21, de sorte à éviter leur mélange et à limiter la production d'ammoniac au sein de l'enceinte d'élevage.

## Revendications

1. Système pour la collecte des déjections s'écoulant sur le sol d'une enceinte pour l'élevage d'animaux, par exemple de bovins, lequel système de collecte comprenant:
(i) un revêtement de sol (1), comprenant :
- une couche supérieure (2), réalisée dans un matériau apte à subir une déformation élastique et comportant une surface supérieure (21) adaptée à l'appui des animaux,
- des conduits (3) ménagés sous ladite couche supérieure (2), adaptés à recevoir un liquide, et
- des orifices traversants (4), ménagés au travers de ladite couche supérieure (2), s'étendant entre la surface supérieure (21) de ladite couche supérieure (2) et lesdits conduits (3), pour l'écoulement des déjections depuis ladite surface supérieure (21) jusqu'auxdits conduits (3),
(ii) des moyens (9) pour la collecte des déjections circulant au sein desdits conduits (3), et
(iii) des moyens (10) pour convoyer les déjections au sein desdits conduits (3), de manière à générer ladite circulation desdites déjections en direction desdits moyens de collecte (9),
**caractérisé en ce que** ledit revêtement de sol (1) comporte une surface de réception (5) recouverte par ladite couche supérieure (2), laquelle surface de réception (5) comporte des portions supports (51) qui sont séparées les unes des autres par des rainures (3) comportant chacune une ouverture supérieure (33) obturée par ladite couche supérieure (2) pour former lesdits conduits (3),
laquelle couche supérieure (2) consiste en une feuille rapportée sur ladite surface de réception (5), et
laquelle surface de réception (5) est constituée par :
- un ensemble de longerons (8) qui sont solidarisés avec une surface support (S), cela de manière juxtaposée et tout en préservant un espacement définissant lesdites rainures (3), ou
- des tapis (6) comportant une embase (61) dont une face inférieure (611) est destinée à reposer sur une surface support (S), et une face supérieure (612) est munie de structures saillantes (62) ménagées à distance les unes des autres, qui délimitent entre elles lesdites rainures (3) et dont la face libre (622) forme la portion support (51).

2. Système selon la revendication 1, **caractérisé en ce que** le revêtement de sol (1) comporte au moins un tapis (6) comportant une embase (65) formant la couche supérieure (2), dont :
- une première face (651) forme la surface supérieure (21) adaptée à l'appui des animaux, et
- une seconde face (652) est munie de structures saillantes (66) ménagées à distance les unes des autres, qui délimitent entre elles des rainures (3) comportant une ouverture longitudinale (37) et dont la face libre (662) est apte à reposer sur une surface support (S).

3. Système selon la revendication 2, **caractérisé en ce que** la première face (651) est également adaptée à reposer sur la surface support (S), et **en ce que** la face libre (662) des structures saillantes (66) est également adaptée à former la surface supérieure (21) adaptée à l'appui des animaux.

4. Système selon l'une quelconque des revendications 1 à 3, **caractérisé en ce que** le matériau de la couche supérieure (2) est choisi parmi les matériaux élastomères ou les matériaux plastiques élastomères.

5. Système selon l'une quelconque des revendications 1 à 4, **caractérisé en ce que** les orifices traversants (4) de la couche supérieure (2) ont une forme allongée, avec une largeur et une longueur comprises entre 5 mm et 120 mm.

6. Système selon l'une quelconque des revendications 1 à 5, **caractérisé en ce que** les moyens (10) pour convoyer les déjections comprennent :
- des organes d'entrainement (101) qui sont chacun rapportés dans l'un desdits conduits (3), lesquels organes d'entrainement (101) comportent chacun une surface de convoyage (1012) qui est apte à convoyer les déjections présentes au sein du conduit (3) associé, et
- des moyens (103) pour la manoeuvre desdits organes d'entraînement (101) au sein de leurs conduits (3) respectifs, de sorte que ladite au moins une surface de convoyage (1012) génère ladite circulation de liquide au sein de son conduit (3).

7. Système selon la revendication 6, **caractérisé en ce que** :
- les organes d'entrainement (101) sont répartis sur la longueur d'au moins un corps allongé (103), et les moyens de manoeuvre (102) consistent en des moyens (1021, 1022) pour la manoeuvre en translation dudit au moins un corps allongé (103), en sens unique ou en oscillation ; ou
- l'un au moins des organes d'entrainement (101) consiste en un organe en forme de vis formant une surface de convoyage (1012) hélicoïdale, et les moyens de manœuvre (102) consistent en des moyens (1023) pour la manœuvre en rotation dudit au moins un organe d'entrainement (101) en forme de vis.

8. Système selon l'une quelconque des revendications 1 à 7, **caractérisé en ce qu'**il comporte encore des moyens pour une alimentation des conduits (3) avec un liquide de traitement.

9. Système selon l'une quelconque des revendications 1 à 8, **caractérisé en ce que** les conduits (3) sont rectilignes et s'étendent parallèlement les uns par rapport aux autres.

10. Système selon la revendication 9, **caractérisé en ce que** les conduits (3) ont chacun :
- une largeur comprise entre 15 et 50 mm et
- une hauteur comprise entre 15 et 50 mm, et
**en ce que** les conduits (3) sont espacés d'une largeur comprise entre 50 et 500 mm.

11. Enceinte d'élevage équipée d'un système de collecte selon l'une quelconque des revendications 1 à 10.

12. Enceinte d'élevage selon la revendication 11, **caractérisée en ce qu'**elle comporte un couloir de circulation (C) comportant un axe longitudinal (C') et recouvert par un revêtement de sol (1), et **en ce que** les conduits (3) dudit revêtement de sol (1) sont agencés parallèlement, ou au moins approximativement parallèlement, par rapport audit axe longitudinal (C').

## Patentansprüche

1. System zum Sammeln von Ausscheidungen, die über den Boden eines Geheges in der Tierzucht fließen, zum Beispiel von Rinden, wobei das System
(i) einen Bodenbelag (1), der
- eine obere Schicht (2), die aus einem eine elastische Verformung vertragenden Material gefertigt ist und eine für den Druck der Tiere ausgelegte obere Oberfläche (21) aufweist,
- unter der oberen Schicht (2) ausgebildete Leitungen (3), die dazu ausgelegt sind, eine Flüssigkeit aufzunehmen, und
- durch die obere Schicht (2) hindurch ausgebildete, sich zwischen der oberen Oberfläche (21) der oberen Schicht (2) und den Leitungen (3) erstreckende Durchgangslöcher (4) für das Abfließen der Ausscheidungen von der oberen Oberfläche (21) zu den Leitungen (3) aufweist,
(ii) Mittel (9) zum Sammeln der in den Leitungen (3) fließenden Ausscheidungen und
(iii) Mittel (10) zum Weiterleiten der Ausscheidungen in den Leitungen (3), um ein Weiterbewegen der Ausscheidungen in Richtung auf die Mittel (9) zum Sammeln zu bewirken,
aufweist,
**dadurch gekennzeichnet, daß**
der Bodenbelag (1) eine Aufnahmefläche (5) aufweist, die mit der oberen Schicht (2) bedeckt ist, wobei die Aufnahmefläche (5) Stützabschnitte (51) aufweist, die durch Rillen (3) voneinander getrennt sind, von denen jede eine obere Öffnung (33) aufweist, die von der oberen Schicht (2) verschlossen ist, um die Leitungen (3) zu bilden,
die obere Schicht (2) aus einer auf die Aufnahmefläche (5) aufgebrachten Folie besteht und
die Aufnahmefläche (5) aus
- einer Gesamtheit von Längsträgern (8), die mit einer Trägerfläche (S) fest verbunden sind, und zwar nebeneinanderliegend und dabei einen die Rillen (3) definierenden Abstand einhaltend, oder
- Teppichen (6), die eine Unterlage (61) aufweisen, von der eine Unterseite (611) dazu bestimmt ist, auf einer Trägerfläche (S) aufzuliegen, und eine Oberseite (612) mit hervorstehenden, in einem Abstand voneinander angeordneten Strukturen (62) versehen ist, die zwischen sich die Rillen (3) begrenzen und deren freie Seite (622) den Stützabschnitt (51) bildet,
gebildet ist.

2. System gemäß Anspruch 1, **dadurch gekennzeichnet, daß** der Bodenbelag (1) wenigstens einen Teppich (6) mit einer die obere Schicht (2) bildenden Basis (65) aufweist, von der
- eine erste Seite (651) die für den Druck der Tiere ausgelegte obere Oberfläche (21) bildet und
- eine zweite Seite (652) mit hervorstehenden Strukturen (66) versehen ist, die in einem Abstand voneinander angeordnet sind, die zwischen sich eine längliche Öffnung (37) aufweisende Rillen (3) begrenzen und deren freie Seite (662) geeignet ist, auf einer Trägerfläche (S) aufzuliegen.

3. System gemäß Anspruch 2, **dadurch gekennzeichnet, daß** die erste Seite (651) auch dazu ausgelegt ist, auf der Trägeroberfläche (S) aufzuliegen, und daß die freie Seite (662) der hervorstehenden Strukturen (66) auch dazu ausgelegt ist, die für den Druck der Tiere ausgelegte obere Oberfläche (21) zu bilden.

4. System gemäß einem der Ansprüche 1 bis 3, **dadurch gekennzeichnet, daß** das Material der oberen Schicht (2) aus den Elastomerwerkstoffen oder aus den elastomeren Plastikwerkstoffen ausgewählt ist.

5. System gemäß einem der Ansprüche 1 bis 4, **dadurch gekennzeichnet, daß** die Durchgangslöcher (4) der oberen Schicht (2) eine längliche Form mit zwischen 5 mm und 120 mm betragender Breite und Länge aufweisen.

6. System gemäß einem der Ansprüche 1 bis 5, **dadurch gekennzeichnet, daß** die Mittel (10) zum Weiterleiten der Ausscheidungen
- Antriebsorgane (101), die jeweils in eine der Leitungen (3) eingebracht sind, wobei die Antriebsorgane (101) jeweils eine Transportoberfläche (1012) aufweisen, die geeignet ist, die in der zugehörigen Leitung (3) vorhandenen Ausscheidungen weiter zu transportieren, und
- Mittel (102) zum Betreiben der Antriebsorgane (101) in den jeweiligen Leitungen (3), damit die wenigstens eine Transportoberfläche (1012) die Bewegung von Flüssigkeit in der Leitung (3) erzeugt,
aufweisen.

7. System gemäß Anspruch 6, **dadurch gekennzeichnet, daß**
- die Antriebsorgane (101) über die Länge wenigstens eines länglichen Körpers (103) verteilt sind und die Betriebsmittel (102) aus Mitteln (1021, 1022) zum Verfahren des wenigstens einen länglichen Körpers (103) in einer einzigen Richtung oder in einer Schwingbewegung bestehen oder
- wenigstens eins der Antriebsorgane (101) aus einem schraubenförmigen, eine schneckenförmige Transportfläche (1012) bildenden Organ besteht und die Betriebsmittel (102) aus Mitteln (1023) für einen Drehbetrieb des wenigstens einen schraubenförmigen Antriebsorgans (101) bestehen.

8. System gemäß einem der Ansprüche 1 bis 7, **dadurch gekennzeichnet, daß** es außerdem Mittel für eine Versorgung der Leitungen (3) mit einer Behandlungsflüssigkeit aufweist.

9. System gemäß einem der Ansprüche 1 bis 8, **dadurch gekennzeichnet, daß** die Leitungen (3) geradlinig sind und sich parallel zueinander erstrecken.

10. System gemäß Anspruch 9, **dadurch gekennzeichnet, daß** die Leitungen (3) jeweils
- eine Breite zwischen 15 und 50 mm und
- eine Höhe zwischen 15 und 50 mm
aufweisen und
daß die Leitungen (3) mit einer Breite zwischen 50 und 500 mm voneinander beabstandet sind.

11. Gehege einer Tierzuchtanlage, das mit einem Sammelsystem gemäß einem der Ansprüche 1 bis 10 ausgerüstet ist.

12. Gehege einer Tierzuchtanlage gemäß Anspruch 11, **dadurch gekennzeichnet, daß** es einen Bewegungsflur (C) aufweist, der eine Längsachse (C') aufweist und mit einem Bodenbelag (1) bedeckt ist, und daß die Leitungen (3) des Bodenbelags (1) parallel oder wenigstens näherungsweise parallel zur Längsachse (C') angeordnet sind.

## Claims

1. A system for collecting the excreta flowing on the ground of an enclosure for livestock, for example cattle, said system comprising:
(i) a flooring (1), comprising :
- an upper layer (2), made of a material capable of undergoing an elastic deformation and including an upper surface (21) suitable for the animals to rest thereon,
- ducts (3) arranged under said upper layer (2), adapted to receive a liquid, and
- through-orifices (4), formed through said upper layer (2), extending between the upper surface (21) of said upper layer (2) and said ducts (3), for the flowing of the excreta from said upper surface (21) to the ducts (3),
(ii) means (9) for collecting the excreta circulating within said ducts (3), and
(iii) means (10) for conveying the excreta within said ducts (3), so as to generate said circulation of said excreta towards said collection means (9),
**characterized in that** said flooring (1) includes a receiving surface (5) covered with said upper layer (2), said receiving surface (5) including support portions (51) that are separated from each other by grooves (3) each having an upper opening (33) closed by said upper layer (2) to form said ducts (3),
said upper layer (2) consisting of a sheet added on said receiving surface (5), and
said receiving surface (5) being consisted of:
- a set of stringers (8) that are fastened to a support surface (S), juxtaposed to each other while preserving a space defining said grooves (3), or
- carpets (6) including a base (61), a lower face (611) of which is intended to rest on a support surface (S), and an upper face (612) of which is provided with protruding structures (62) arranged remote from each other, which delimit between each other said grooves (3) and the free face (622) of which forms the support portion (51).

2. The system according to claim 1, **characterized in that** the flooring (1) includes at least one carpet (6) including a base (65) forming the upper layer (2), of which:
- a first face (651) forms the upper surface (21) suitable for the animals to rest thereon, and
- a second face (652) is provided with protruding structures (66) arranged remote from each other, which delimit between each other grooves (3) having a longitudinal opening (37) and the free face (662) of which is adapted to rest on a support surface (S).

3. The system according to claim 2, **characterized in that** the first face (651) is also adapted to rest on the support surface (S), and **in that** the free face (662) of the protruding structures (66) is also adapted to form the upper surface (21) suitable for the animals to rest thereon.

4. The system according to any one of claims 1 to 3, **characterized in that** the material of the upper layer (2) is chosen among the elastomeric materials or the elastomeric plastic materials.

5. The system according to any one of claims 1 to 4, **characterized in that** the through-orifices (4) of the upper layer (2) have an elongated shape, with a width and a length comprised between 5 mm and 120 mm.

6. The system according to any one of claims 1 to 5, **characterized in that** the means (10) for conveying the excreta comprise:
- driving members (101) that are each added in one of said ducts (3), said driving members (101) each including a conveying surface (1012) that is adapted to convey the excreta present within the associated duct (3), and
- means (103) for operating said driving members (101) within their respective ducts (3), so that said at least one conveying surface (1012) generates said circulation of liquid within the duct (3) thereof.

7. The system according to claim 6, **characterized in that**:
- the driving members (101) are distributed over the length of at least one elongated body (103), and the operating means (102) consist of means (1021, 1022) for operating said at least one elongated body (103) in translation, in one-way direction or in oscillation; or
- one at least of the driving members (101) consists of a screw-shaped member forming a helical conveying surface (1012), and the operating means (102) consist of means (1023) for operating said at least one screw-shaped driving member (101) in rotation.

8. The system according to any one of claims 1 to 7, **characterized in that** it also includes means for supplying the ducts (3) with a process liquid.

9. The system according to any one of claims 1 to 8, **characterized in that** the ducts (3) are straight and extend parallel to each other.

10. The system according to claim 9, **characterized in that** the ducts (3) each have:
- a width comprised between 15 and 50 mm, and
- a height comprised between 15 and 50 mm, and
**in that** the ducts (3) are spaced apart by a width comprised between 50 and 500 mm.

11. A livestock enclosure equipped with a collection system according to any one of claims 1 to 10.

12. The livestock enclosure according to claim 11, **characterized in that** it includes a circulation corridor (C) having a longitudinal axis (C') and covered with a flooring (1), and **in that** the ducts (3) of said flooring (1) are arranged parallel, or at least approximately parallel, with respect to said longitudinal axis (C').
